# EUROPEAN PATENT SPECIFICATION

(11) **EP 2 166 452 B1**
(45) Date of publication and mention of the grant of the patent: **01.08.2012**
(21) Application number: 07744673.0
(22) Date of filing: 04.06.2007
(51) Int. Cl.: G06F 11/14

(54) **RESTART SUPPORT PROGRAM AND RESTART SUPPORT DEVICE**
NEUSTARTUNTERSTÜTZUNGSPROGRAMM UND NEUSTARTUNTERSTÜTZUNGSEINRICHTUNG
PROGRAMME D'ASSISTANCE AU REDÉMARRAGE ET DISPOSITIF D'ASSISTANCE AU REDÉMARRAGE

(43) Date of publication of application: 24.03.2010
(73) Proprietor: Fujitsu Limited, Kawasaki-shi, Kanagawa 211-8588 (JP)
(72) Inventor: OKANO, Tetsuya, Kawasaki-shi Kanagawa 211-8588 (JP)
(74) Representative: Fenlon, Christine Lesley
(86) International application number: PCT/JP2007/061315
(87) International publication number: WO 2008/149416

(56) References cited:
- GB-A- 2 304 214
- JP-A- 4 175 830
- JP-A- 04 175 830
- JP-A- 2001 331 330
- JP-A- 2004 265 129
- US-A1- 2002 188 653

## Description

### TECHNICAL FIELD

The present invention relates to a restart support program and a restart support device.

### BACKGROUND ART

Conventionally, a system (a workflow service) in which a routine work is described as a workflow, and processing is performed according to the described workflow is excellent in work efficiency and thus has been introduced into various scenes such as a scene for operating an information technology (IT) resource. Since the workflow is described by a person with a high degree of skill or knowledge, skill or knowledge of a high degree is reflected in the workflow. As a result, even when processing is performed such that a system is run by a worker with a low degree of skill or even when processing is fully automatically performed by a system without involving a worker, a work is performed with stable quality.

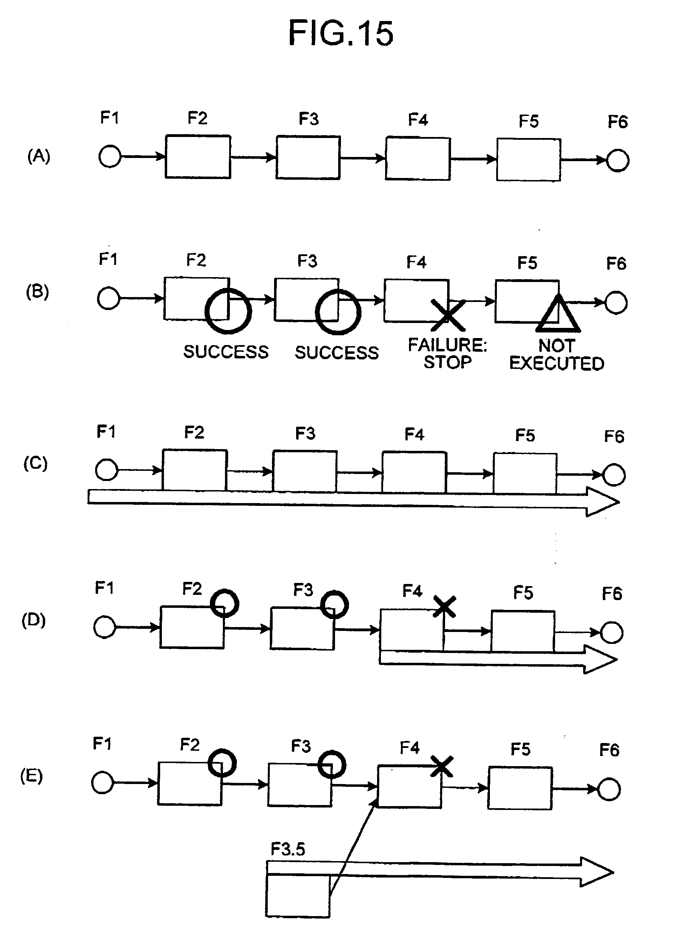

FIG. 15 is a view for explaining a conventional art. In a system in which processing is performed according to a workflow illustrated in (A) of FIG. 15, a problem occurs while a flow is being executed. Thus, as illustrated in (B) of FIG. 15, when execution of the system stops in flow 4 (F4), in order to restart the system after resolving the problem, it has to be determined from which flow execution is to be restarted or which work is necessary for restart. For example, it has to be determined whether to restart from first flow 1 (F1) as illustrated in (C) of FIG. 15, to restart from failed flow 4 (F4) as illustrated in (D) of FIG. 15, or to perform flow 3.5 (F3.5) which is special processing for avoiding a failure as illustrated in (E) of FIG. 15. This determination has been performed by a person with a high degree of skill or knowledge or according to a guidebook written by a person with a high degree of skill or knowledge.

For example, in a technique disclosed in JP 09-50406A, a plurality of systems in which processing is performed according to a workflow store an operation history and use the stored history at the time of recovery from a system down, thereby securing reliability.

A method for providing recoverable workflow of complex or risk-prone workflows in a computer system is disclosed in US2002/0188653A and includes segmenting such workflows into sub-processes, associating a checkpoint with the end of each sub-process, and determining whether processing of each sub-process was successful. If so, a set of parameters is stored at each checkpoint before processing the next sub-process, but otherwise processing of the failed sub-process is retried, using the parameter set stored at the previous checkpoint.

JP 04 175830 discloses a rerun control method in which a job managing record, consisting of job information representing the execution status of steps in the jobs of "job name", "step name" and "status", and step information representing the execution status in processing units in the steps of "currency information" and "work information" and a processing result, is updated corresponding to the execution of the processing in the job. When an executed job is restarted, the rerun is executed starting from an interrupted processing unit in an interrupted step without performing a normally completed step and processing unit in duplication by referring to the job managing record.

GB2304214A discloses a historical information management unit which keeps records of the work flow in the network. If one of the network nodes crashes and the historical information stored in that node is damaged, it can be recovered by comparing the damaged historical information remaining in the node with information from the historical information management unit. Information relating to the network connections of the failed node can be used to speed the process of recovering the log.

### DISCLOSURE OF INVENTION

### PROBLEM TO BE SOLVED BY THE INVENTION

However, in the conventional art, there was a problem in that it was difficult to determine processing in which execution has to be restarted when the system has stopped execution in certain processing. That is, in the conventional art, when the system has stopped execution in certain processing, only a restricted person such as a person with a high degree of skill or knowledge could determine processing in which execution has to be restarted, or it was difficult to determine processing in which execution has to be restarted without a guidebook written by a person with a high degree of skill or knowledge. Further, in the technique disclosed in Patent Document 1, processing in which execution has to be restarted is not determined.

Therefore, the present invention is to resolve the problem of the conventional art, and it is an object of the present invention to provide a restart support program and a restart support device in which it is possible to determine processing in which execution has to be restarted when the system has stopped execution in certain processing.

### MEANS FOR SOLVING THE PROBLEM

According to an aspect of an embodiment of the invention there is provided a restart support program for, when executed on a computer, executing a method of supporting restart of a system in a computer when the system in which a sequence flow representing an order in which a plurality of processings are executed, one or more objects which are processing targets in each processing, and one or more operations for each object are defined stops execution in certain processing, the program causing the computer to perform: a version information storing step of storing version information related to a version of the object which transitions with the operation in association with each processing for each object; a stop information receiving step of receiving information representing processing in which execution is stopped when the system stops execution in certain processing; and a restart processing determining step of, when the information is received at the stop information receiving step, determining processing in which execution has to be restarted from among the plurality of processings based on success and failure of processing indicated in the received information, the object and the version information of each object which are stored in association with processing at the version information storing step, and an object and version information of each object which are actually stored in the system.

In the restart support program, the restart processing determining step may include determining processing in which execution has to be restarted based on information related to other processing which is associated with the processing in a sequence flow as well as processing indicated in information received at the stop information receiving step.

In the restart support program, the version information storing step may be created from information defined in the system.

In the restart support program, the version information storing step may be created from log information accumulated with processing of the system.

According to another aspect of an embodiment of the invention there is provided a restart support device for supporting restart of a system when the system in which a sequence flow representing an order in which a plurality of processings are executed, one or more objects which are processing targets in each processing, and one or more operations for each object are defined stops execution in certain processing, the restart support device comprising a version information storing unit that stores version information related to a version of the object which transitions with the operation in association with each processing for each object; a stop information receiving unit that receives information representing processing in which execution is stopped when the system stops execution in certain processing; and a restart processing determining unit that, when the information is received by the stop information receiving unit, determines processing in which execution has to be restarted from among the plurality of processings based on success and failure of processing indicated in the received information, the object and the version information of each object which are stored in association with processing by the version information storing unit, and an object and version information of each object which are actually stored in the system.

In the restart support device, the restart processing determining unit may determine processing in which execution has to be restarted based on information related to other processing which is associated with the processing in a sequence flow as well as processing indicated in information received by the stop information receiving unit.

In the restart support device, the version information storing unit may be created from information defined in the system.

In the restart support device, the version information storing unit may be created from log information accumulated with processing of the system.

According to still another aspect of an embodiment of the invention, there is provided a restart support method for supporting restart of a system when the system in which a sequence flow representing an order in which a plurality of processings are executed, one or more objects which are processing targets in each processing, and one or more operations for each object are defined stops execution in certain processing. The restart support method includes a version information storing step of storing version information related to a version of the object which transitions with the operation in association with each processing for each object; a stop information receiving step of receiving information representing processing in which execution is stopped when the system stops execution in certain processing; and a restart processing determining step of, when the information is received at the stop information receiving step, determining processing in which execution has to be restarted from among the plurality of processings based on success and failure of processing indicated in the received information, the object and the version information of each object which are stored in association with processing at the version information storing step, and an object and version information of each object which are actually stored in the system.

In the restart support method, the restart processing determining step may include determining processing in which execution has to be restarted based on information related to other processing which is associated with the processing in a sequence flow as well as processing indicated in information received at the stop information receiving step.

In the restart support method, the version information storing step may be created from information defined in the system.

In the restart support method, the version information storing step may be created from log information accumulated with processing of the system.

### EFFECT OF THE INVENTION

According to an embodiment a restart support program is provided which executes a method of supporting restart of the system in a computer when the system in which a sequence flow representing an order in which a plurality of processings are executed, one or more objects which are processing targets in each processing, and one or more operations for each object are defined has stopped execution in certain processing. The restart support program stores version information related to a version of an object which transitions with an operation in association with each processing for each object. When the system has stopped execution in certain processing, the restart support program receives information representing processing in which execution has been stopped and, when the information is received, determines processing in which execution has to be restarted from among a plurality of processings based on success and failure of processing indicated in the received information, an object and version information of each object which are stored in association with processing, and an object and version information of each object which are actually stored in the system. Therefore, it is possible to determine processing in which execution has to be restarted when the system has stopped execution in certain processing.

Further, according to an embodiment , since processing in which execution has to be restarted is determined based on information related to other processing which is associated with processing in a sequence flow as well as processing indicated in received information, when the system has stopped execution in certain processing, it is possible to determine optimal processing in which execution has to be restarted in the whole sequence flow.

Further, according to an embodiment , since version information of an object is created from information defined in the system, it is possible to easily implement a structure for determining processing in which execution has to be restarted.

Further, according to an embodiment , since version information of an object is created from log information accumulated with processing of the system, even when version information can not be created from information defined in the system, it is possible to implement a structure of determining processing in which execution has to be restarted.

### BRIEF DESCRIPTION OF DRAWINGS

FIG. 1 is a view for explaining a concept and feature of a restart support device according to a first embodiment.
FIG. 2 is a block diagram illustrating a configuration of the restart support device according to the first embodiment.
FIG. 3 is a view for explaining a system.
FIG. 4 is a view for explaining restart processing determination.
FIG. 5 is a view for explaining a point of restart processing determination.
FIG. 6 is a view for explaining an operation for an object.
FIG. 7 is a view for explaining a system according to the first embodiment.
FIG. 8 is a view for explaining restart processing determination according to the first embodiment.
FIG. 9 is a view for explaining a version of an object.
FIG. 10 is a view for explaining a version information storing unit according to the first embodiment.
FIG. 11 is a view for explaining restart processing determination according to the first embodiment.
FIG. 12 is a flowchart illustrating a procedure of processing by the restart support device according to the first embodiment.
FIG. 13 is a view for explaining restart processing determination according to a second embodiment.
FIG. 14 is a view for explaining a computer which executes a restart support program.
FIG. 15 is a view for explaining a conventional technology.

### EXPLANATION OF LETTERS OR NUMERALS

- 10: Restart support device
- 11: Input unit
- 12: Output unit
- 13: Input/output control I/F unit
- 14: Communication unit
- 20: Storage unit
- 21: Version information storing unit
- 22: Determination result storing unit
- 30: Control unit
- 31: Stop information receiving unit
- 32: Restart processing determining unit
- 40: Restart support program (computer)
- 41: Cache
- 42: RAM
- 43: HDD
- 43a: Version information table
- 43b: Determination result table
- 44: ROM
- 44a: Stop information receiving program
- 44b: Restart processing determining program
- 45: CPU
- 45a: Stop information receiving process
- 45b: Restart processing determining process
- 46: Bus

### BEST MODE(S) FOR CARRYING OUT THE INVENTION

Hereinafter, embodiments of a restart support program and a restart support device according to the present invention will be described with reference to the accompanying drawings. Main terms used in the embodiments, a concept and a feature of a restart support device according to a first embodiment, a configuration of the restart support device according to the first embodiment, a procedure of processing by the restart support device according to the first embodiment, and effects of the first embodiment will be described below in this order, and other embodiments will be subsequently described.

### First Embodiment

### Description of Terms

First, main terms used in the following embodiments will be explained. A "system" used in the following embodiments is a system in which a routine work is described as a workflow, and processing is performed according to the described workflow. In the "system", since a plurality of "processings" are performed, a "sequence flow" representing an order in which a plurality of "processings" are performed is defined. Further, in each "processing", since an "object" is a target of "processing", one or more "objects" are defined. Further, since an "operation" is performed for each "object", one or more "operations" are defined. The "operation" includes, for example, "Create", "Read", "Write", and "Destroy". The "object" is created by "Create", and the "object" is destroyed by "Destroy".

However, the "system" executes processing according to the defined "sequence flow" and executes processing by performing the defined "operation" for the defined "object" in each "processing". However, when an error occurs while processing is being executed, the "system" stops execution in certain processing.

The "system" which has stopped execution is restarted after the error is resolved. However, at this time, the "system" may not simply restart execution from processing in which execution has been stopped. As described above, since the "system" performs one or more "operations" for one or more "objects" during one "processing", processing in which the "system" has to restart execution depends on in which state execution of processing has been stopped.

For example, various situations are supposed depending on whether the "system" has stopped execution of processing before or after the "object" which has to be created is created or before or after the "object" which has to be destroyed is destroyed. Therefore, the "system" may not simply restart execution from processing in which execution has been stopped, but has to determine processing which has to be restarted and perform a work necessary for restart of processing. For this reason, it is important how the restart support device according to the present invention determines processing in which execution has to be restarted from among a plurality of processings.

Concept and feature of the restart support device according to the first embodiment

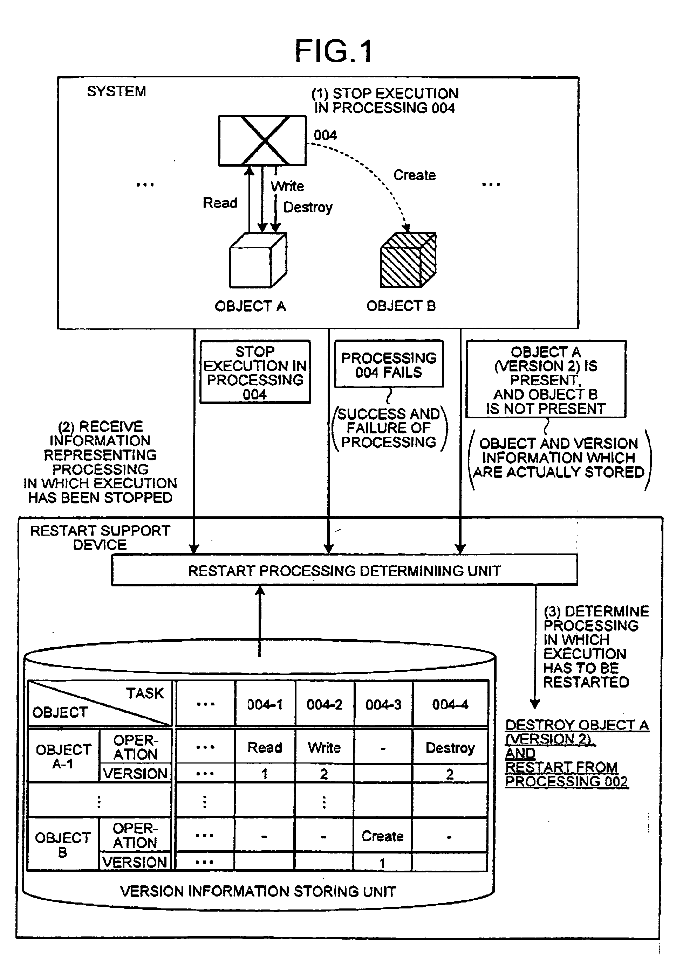

Next, a concept and feature of the restart support device according to the first embodiment will be described with reference to FIG. 1. FIG. 1 is a view for explaining the concept and feature of the restart support device according to the first embodiment. In the first embodiment, assumed is a technique in which the system in which processing is executed and the restart support device are implemented as different devices. However, the present invention is not limited thereto, and the present invention can be equally applied to a technique in which the system and the restart support device are implemented as the same device.

The restart support device according to the first embodiment basically supports restart of the system when the system in which the sequence flow representing an order in which a plurality of processings are executed, one or more objects which are processing targets in each processing, and one or more operations for each object are defined as described above has stopped execution in certain processing and is characterized in determining processing in which execution has to be restarted when the system has stopped execution in certain processing.

The main feature will be simply described. In the system according to the first embodiment, the sequence flow representing an order in which a plurality of processings are executed, one or more objects which are processing targets in each processing, and one or more operations for each object are defined. For example, FIG. 1 illustrates only "processing 004" of the sequence flow for convenience of description. "Object A" and "object B" as processing targets in "processing 004" are defined, "Read", "Write", and "Destroy" are defined as operations of "object A", and "Create" is defined as an operation of "object B".

Further, the restart support device according to the first embodiment stores version information related to a version of an object which transitions with an operation in association with each processing for each object in the version information storing unit. For example, FIG. 1 illustrates only version information which is stored in association with "processing 004" among version information stored in the version information storing unit for convenience of description. For "object A-1", "1", "2", and "2" are stored as version information which transitions with operations "Read", "Write", and "Destroy".

When the system according to the first embodiment has stopped execution of certain processing (see (1) of FIG. 1) under the configuration, the restart support device receives information representing processing in which execution has been stopped (see (2) of FIG. 1). For example, the restart support device receives information of "execution has been stopped in "processing 004" from the system.

Next, when the information is received, the restart support device determines processing in which execution has to be restarted (see (3) of FIG. 1) based on success and failure of processing indicated in the received information, an object and version information of each object which are stored in association with the processing in the version information storing unit, and an object and version information of each object which are actually stored in the system.

For example, when information of "execution has been stopped in "processing 004" is received, the restart support device determines processing in which execution has to be restarted, based on information of '"processing 004" has failed' as success or failure of "processing 004" indicated in the received information, "object A" and version information of "object A" which are stored in association with "processing 004" in the version information storing unit, "object B" and version information of "object B" which are stored in association with "processing 004" in the version information storing unit, and information of '"object A" is present and has "version 2", and "object B" is not present' as an object and version information of each object which are actually stored in the system.

In this case, the restart support device inspects whether to restart from "processing 004" since "object B" is not present. However, since "object A" necessary for "processing 004" has to has "version 1", and "object A" actually stored in the system has "version 2", the restart support device thus determines that execution has to be restarted from "processing 002" (not illustrated) in which "object A" of "version 2" is destroyed and "object A" of "version 1" is generated.

Therefore, the restart support device of the present invention can determine processing in which execution has to be restarted when the system has stopped execution in certain processing.

Configuration of the restart support device according to the first embodiment

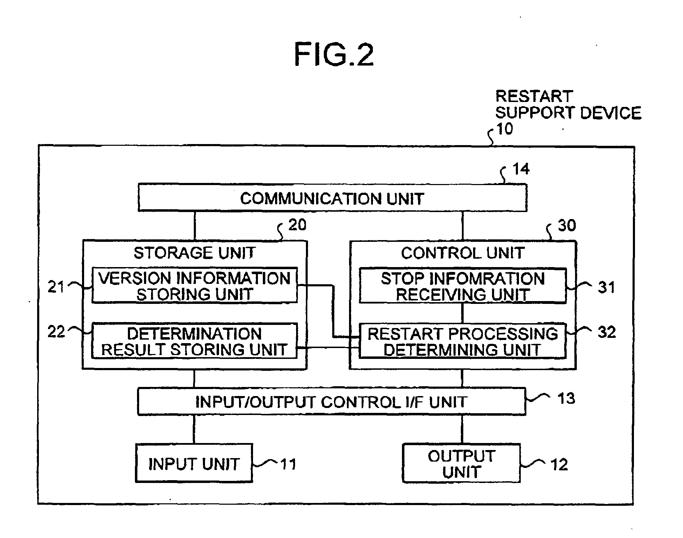

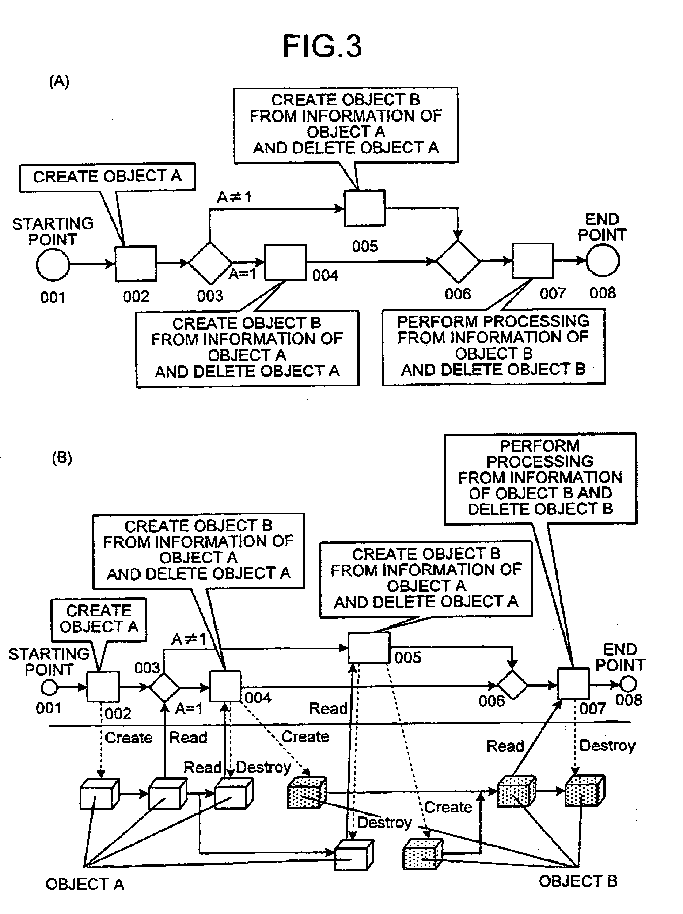

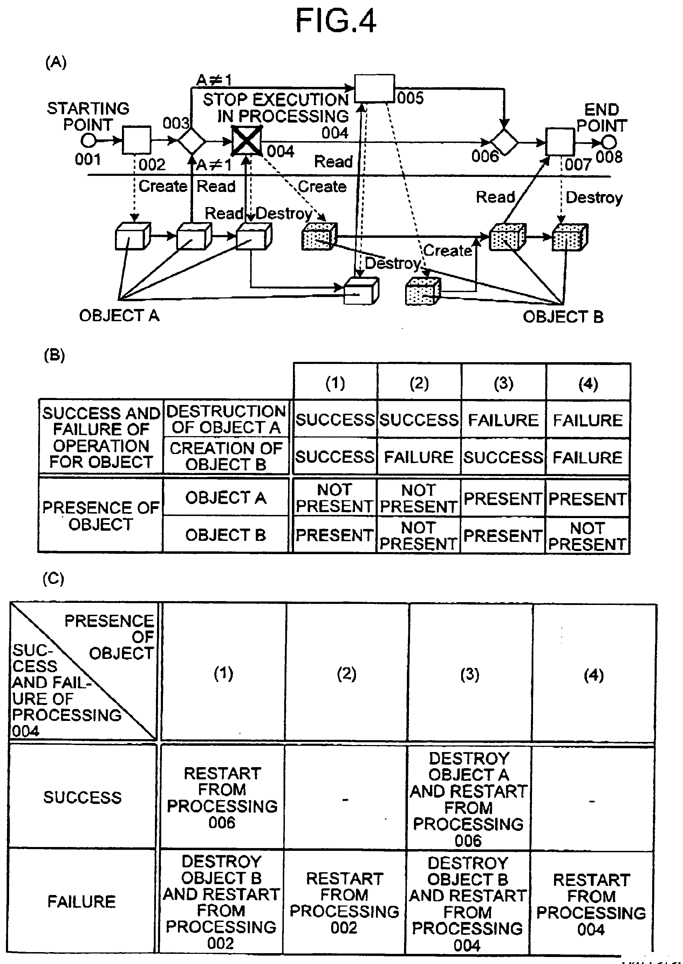

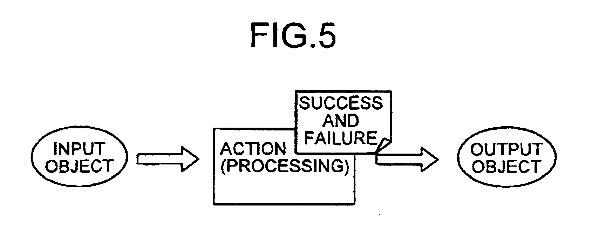

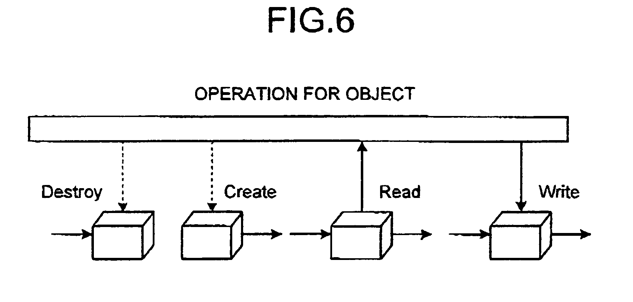

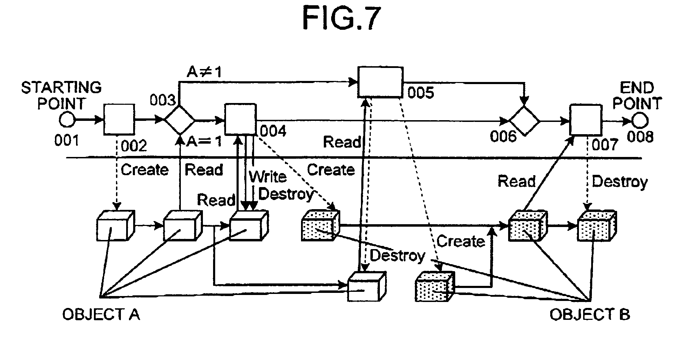

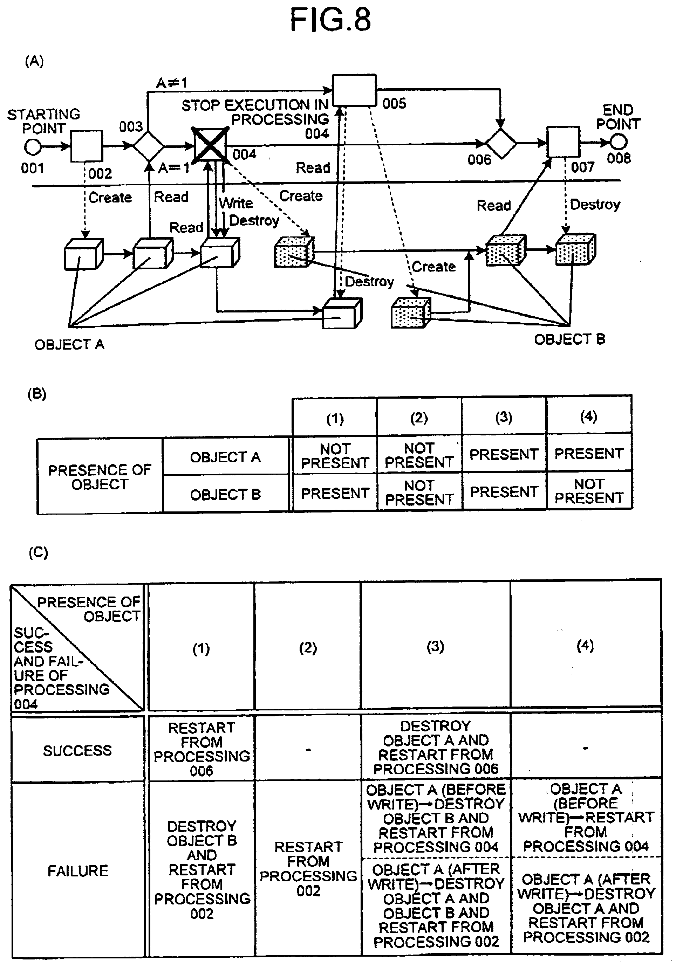

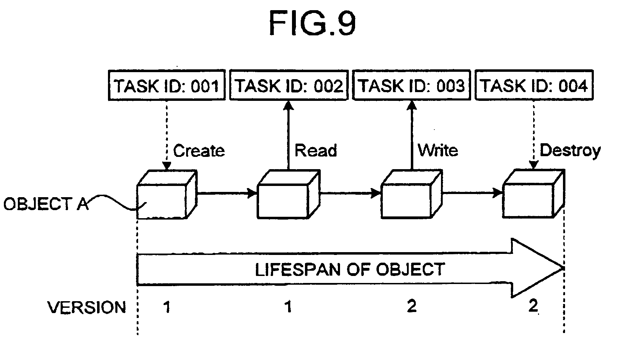

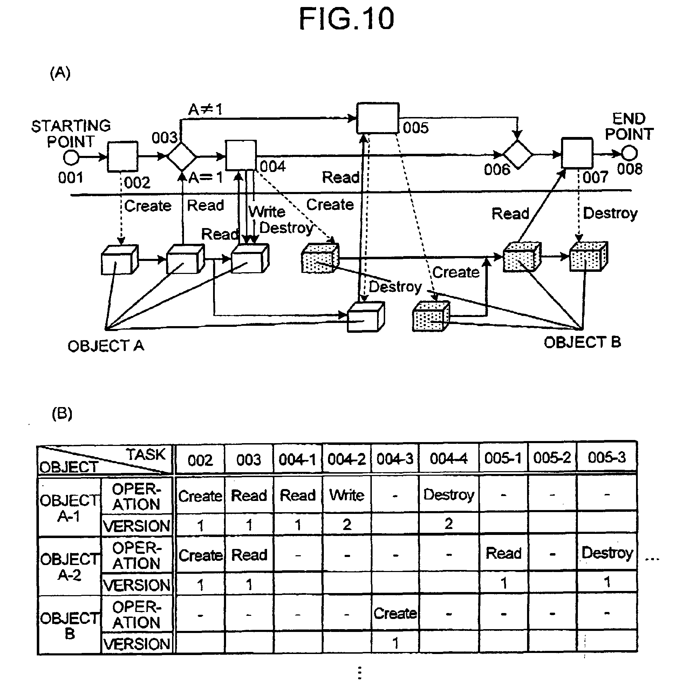

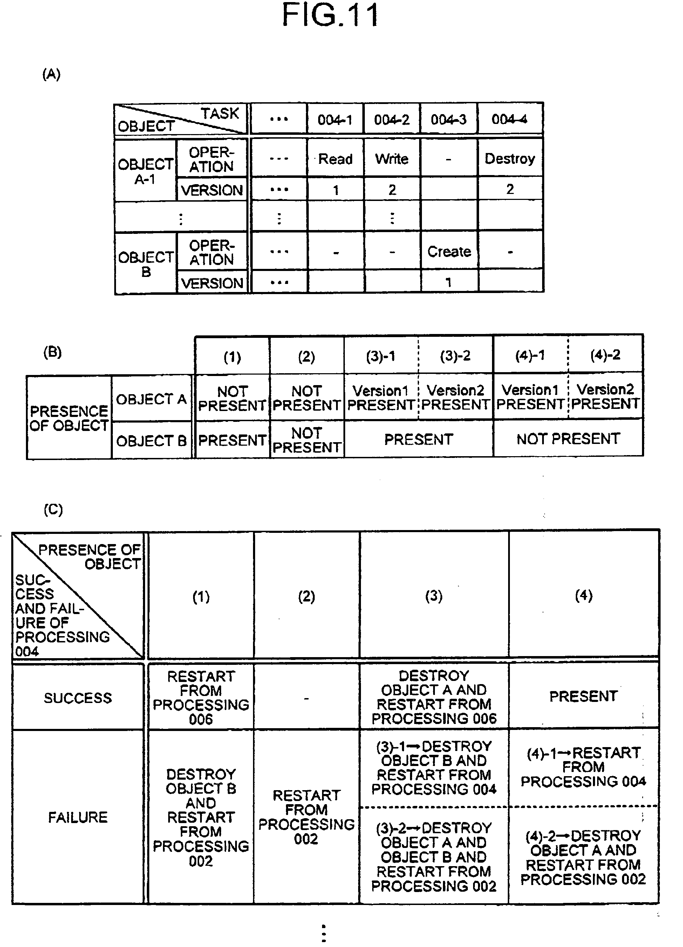

A configuration of the restart support device according to the first embodiment will be described with reference to FIGS. 2 to 11. FIG. 2 is a block diagram illustrating a configuration of the restart support device according to the first embodiment, FIG. 3 is a view for explaining the system, FIG. 4 is a view for explaining restart processing determination, FIG. 5 is a view for explaining a point of restart processing determination, FIG. 6 is a view for explaining an operation for an object, FIG. 7 is a view for explaining the system according to the first embodiment, FIG. 8 is a view for explaining restart processing determination according to the first embodiment, FIG. 9 is a view for explaining a version of an object, FIG. 10 is a view for explaining the version information storing unit according to the first embodiment, and FIG. 11 is a view for explaining restart processing determination according to the first embodiment.

As illustrated in FIG. 2, a restart support device 10 according to the first embodiment includes an input unit 11, an output unit 12, an input/output control I/F unit 13, a communication unit 14, a storage unit 20, and a control unit 30.

The input unit 11 inputs, for example, data used in various processings by the control unit 30 or an operation instruction for performing various processings by, for example, a keyboard, a mouse, or a storage medium. In particular, the input unit 11 inputs version information to be stored in a version information storing unit 21 which will be described later through, for example, the keyboard and stores the version information in the version information storing unit 21.

The output unit 12 outputs results of various processing by the control unit 30 or an operation instruction for performing various processings to, for example, a monitor or a printer. Particularly, the output unit 12 outputs a screen for inputting version information through the input unit 11, a determination result to be stored in a determination result storing unit 22 which will be described later, or version information stored in the version information storing unit 21 to the monitor.

The input/output control I/F unit 13 controls data transfer between the input unit 11 and the output unit 12, and the storage unit 20 and the control unit 30.

The communication unit 14 includes a general library for communications and performs communications between the restart support device 10 and the system. Particularly, the communication unit 14 transmits information representing processing in which execution has been stopped, and an object and version information of each object which are actually stored in the system from the system to the restart support device 10 when the system has stopped execution in certain processing.

The storage unit 20 stores data used in various processing by the control unit 30 and particularly includes the version information storing unit 21 and the determination result storing unit 22, which are closely related to the present invention, as illustrated in FIG. 2.

The version information storing unit 21 stores version information related to a version of an object which transitions with an operation in association with each processing for each object. Particularly, the version information storing unit 21 stores version information input by the input unit 11, version information created from information defined in the system, or version information created from log information accumulated with processing of the system, and the stored version information is used in processing by a restart processing determining unit 22 which will be described later. The version information stored in the version information storing unit 21 will be described later in detail.

The determination result storing unit 22 stores a determination result. Particularly, the determination result storing unit 22 stores a determination result determined by a restart processing determining unit 32 which will be described later and outputs the stored determination result through the output unit 12.

The control unit 30 controls the restart support device 10 to perform various processings and particularly includes a stop information receiving unit 31 and the restart processing determining unit 32, which are closely related to the present invention, as illustrated in FIG. 2.

The stop information receiving unit 31 receives information representing processing in which execution has been stopped when the system has stopped execution in certain processing. Particularly, the stop information receiving unit 31 receives information representing processing in which execution has been stopped from the system through the communication unit 14, and the received information is used in processing by the restart processing determining unit 32. In the first embodiment, a technique in which the stop information receiving unit 31 receives information representing processing in which execution has been stopped from the system is described, but the present invention is not limited thereto, and a technique in which information representing processing in which execution has been stopped is input and received by a user of the restart support device 10 may be used.

The restart processing determining unit 32 determines processing in which execution has to be restarted, based on success and failure of processing indicated in the information received by the stop information receiving unit 31, an object and version information of each object which are stored in association with processing in the version information storing unit 21, and an object and version information of each object which are actually stored in the system. Particularly, when information is received by the stop information receiving unit 31, the restart processing determining unit 32 determines processing in which execution has to be restarted based on success and failure of processing indicated in the received information, an object and version information of each object which are stored in association with the processing in the version information storing unit 21, and an object and version information of each object which are actually stored in the system, and stores the determination result in the determination result storing unit 22. The restart processing determining unit 32 receives and acquires success and failure of processing indicated in the received information or an object and version information of each object which are actually stored in the system from the system through the communication unit 14 or by input through the input unit 11 by the user of the restart support device 10.

### Detailed description of the restart support device

The restart support device 10 according to the present invention is configured by the respective components described above, and functions of the respective components will be described below in detail. First, a system in which restart is supported by the restart support device 10 according to the present invention will be described with reference to FIG. 3. (A) of FIG. 3 illustrates an example of a system in which a sequence flow representing an order in which a plurality of processings are executed, one or more objects which are processing targets in each processing, and one or more operations for each object are defined. Circles, rectangles, and rhombuses represent respective processings, and numbers "001" to "008" represent an order in which a plurality of processings are executed. That is, in FIG. 3, a plurality of processings are executed in an order in which "001" is a starting point and "008" is an end point.

However, for each processing, one or more objects are processing targets, and for each object, one or more operations are performed. As illustrated in (A) of FIG. 3, in processing "002", "object A" is a processing target, and an operation of "creation of object A" is performed. In processing "004", "object A" and "object B" are processing targets, and an operation of "object B is created from information of object A, and object A is deleted" is performed. In processing "005", "object A" and "object B" are processing targets, and an operation of "object B is created from information of object A, and object A is deleted" is performed. In processing "007", "object B" is a processing target, and an operation of "processing is performed from information of object B, and object B is deleted" is performed. (B) of FIG. 3 illustrates the processing targets or the above-described operations (in each processing, which object is input or output and in which flow an object is input or output).

For example, it is assumed that the system illustrated in (B) of FIG. 3 has stopped execution in processing "004" as illustrated in (A) of FIG. 4. When only an operation for an object is considered, situations of four patterns (1) to (4) may be supposed as illustrated in (B) of FIG. 4. That is, supposed are pattern (1) in which destruction of "object A" is successful and creation of "object B" is also successful, pattern (2) in which destruction of "object A" is successful but creation of "object B" fails, pattern (3) in which destruction of "object A" fails but creation of "object B" is successful, and pattern (4) in which destruction of "object A" fails and creation of "object B" also fails.

Here, when destruction of "object A" is successful, "object A" is not present in an object actually stored in the system. To the contrary, when destruction of "object A" fails, "object A" is present in an object actually stored in the system. Further, when creation of "object B" is successful, "object B" is present in an object actually stored in the system. To the contrary, when creation of "object B" fails, "object B" is not present in an object actually stored in the system. A relationship between four patterns which may be supposed as success and failure of an operation for an object and the presence of an object actually stored in the system is illustrated in rows of "presence of object" of a table illustrated in (B) of FIG. 4.

Further, as illustrated in (A) of FIG. 4, when the system has stopped execution in processing "004", two patterns of "success" and "failure" are considered as success and failure of processing of processing "004" itself. In order to determine processing in which execution has to be restarted among from a plurality of processings, as illustrated in (C) of FIG. 4, success and failure of processing "004" and the presence of an object of each pattern need to be considered according to cases. In a combination in which success and failure of processing "004" is "success" and the presence of an object is pattern (2) and a combination in which success and failure of processing "004" is "success" and the presence of an object is pattern (4), there are no description since there is no case in which success and failure of processing "004" is "success" when "object B" is not present.

A case in which success and failure of processing "004" is "success" and the presence of an object is pattern (1) will be described. Since processing "004" is successful, as illustrated in (A) of FIG. 4, it is considered that execution has to be restarted from processing "006" next to processing "004". However, in order to restart execution from processing "006", "object A" should not be present, and "object B" has to be present. Pattern (1) exactly corresponds to this pattern. For this reason, as illustrated in (C) of FIG. 4, it is determined that "execution has to be restarted from processing "006".

A case in which success and failure of processing "004" is "success" and the presence of an object is pattern (3) will be described. Since processing "004" is successful, similarly, it is considered that execution has to be restarted from next processing "005". However, since pattern (3) is a pattern in which "object A" is present, in order to restart execution from processing "006", "object A" needs to be destroyed. For this reason, as illustrated in (C) of FIG. 4, it is determined that "object A" has to be destroyed and execution has to be restarted from processing "006".

A case in which success and failure of processing "004" is "failure" and the presence of an object is pattern (1) will be described. Since processing "004" has failed, it is considered that execution has to be restarted from processing "004". However, in order to restart execution from processing "004", "object A" has to be present, and "object B" should not be present. However, since pattern (1) is a pattern in which "object A" is not present, execution can not be restarted from processing "009", and it is necessary to return to processing "002" in which "object A" is created to restart execution. In addition, "object B" needs to be destroyed. For this reason, as illustrated in (C) of FIG. 4, it is determined that "object B" has to be destroyed and execution has to be restarted from processing "002".

A case in which success and failure of processing "004" is "failure" and the presence of an object is pattern (2) will be described. Since processing "004" has failed, it is considered that execution has to be restarted from processing "004". However, similarly to pattern (1), since pattern (2) is a pattern in which "object A" is not present, execution can not be restarted from processing "004", and it is necessary to return to processing "002" in which "object A" is created to restart execution. "Object B" does not need to be destroyed. For this reason, as illustrated in (C) of FIG. 4, it is determined that "execution has to be restarted from processing "002".

A case in which success and failure of processing "004" is "failure" and the presence of an object is pattern (3) will be described. Since processing "004" has failed, it is considered that execution has to be restarted from processing "004". However, in order to restart execution from processing "004", "object A" has to be present, and "object B" should not be present. However, since pattern (3) is a pattern in which "object A" and "object B" are present, execution can be restarted from processing "004" by destroying "object B". For this reason, as illustrated in (C) of FIG. 4, it is determined that "object B" has to be destroyed and execution has to be restarted from processing "004".

A case in which success and failure of processing "004" is "failure" and the presence of an object is pattern (4) will be described. Since processing "004" has failed, it is considered that execution has to be restarted from processing "004". However, in order to restart execution from processing "004", "object A" has to be present, and "object B" should not be present. Pattern (4) exactly corresponds to this pattern. For this reason, as illustrated in (C) of FIG. 4, it is determined that "execution has to be restarted from processing "004".

When these determinations are considered, as illustrated in FIG. 5, it is considered that success and failure of processing (Action) and the presence of an object (Input Object) input for processing, an object (Output Object) output from processing, and an object actually stored in the system are points of determination. However, as described below, it may be difficult to exactly determine processing in which execution has to be restarted by using only these pieces of information.

In the examples of FIG. 3 and (A) of FIG. 4, "Read" and "Destroy" have been performed as operations for one object in one processing. However, in the actual system, for example, as illustrated in FIG. 6, various operations such as "Destroy", "Create", "Read", and "Write" may be performed as operations for one object in one processing.

For example, FIG. 7 illustrates a system which is almost identical to the system illustrated in FIG. 3 and (A) of FIG. 4. However, it is different in the fact that in processing "004", not only "object B" is "Created" after "object A" is "Read", but also "object A" is "Read" and then "written", and "object B" is "Created" from "object A" after "Write".

As illustrated in (A) of FIG. 8, it is assumed that the system of FIG. 7 has stopped execution in processing "004". In a same manner as described above, when patterns of "the presence of objects" are considered, four patterns can be supposed as illustrated in (B) of FIG. 8.

As illustrated in (C) of FIG. 8, success and failure of processing "004" and the presence of an object of each pattern are considered according to cases in determining processing in which execution has to be restarted from among a plurality of processings. It can be understood that for a case in which success and failure of processing "004" is "failure" and the presence of an object is pattern (3) and a case in which success and failure of processing "004" is "failure" and the presence of an object is pattern (4), derived is determination different from determination performed in (C) of FIG. 4.

A case in which success and failure of processing "004" is "failure" and the presence of an object is pattern (3) will be described. First, since processing "004" has failed, it is considered that execution has to be restarted from processing "004". In order to restart execution from processing "004", "object A" has to be present, and "object B" should not be present. However, it has to be noted that since "object A" before "Write" needs to be present, and if "object A" after "Write" is present, it is difficult to restart execution from processing "004". That is, in processing "004", "object A" before "Write" and "object A" after "Write" are different, and in order to restart execution from processing "004", "object A" before "write" needs to be present.

In the case in which success and failure of processing "004" is "failure" and the presence of an object is pattern (3), if "object A" before "Write" is present, as illustrated in (C) of FIG. 4, it is determined that "object B" has to be destroyed and execution has to be restarted from processing "004". However, if "object A" after "Write" is present, as illustrated in (C) of FIG. 8, it has to be determined that "object A" and "object B" have to be destroyed and execution has to be restarted from processing "002". The case in which success and failure of processing "004" is "failure" and the presence of an object is pattern (4) is the same as the above case.

As described above, since exact determination may not be performed, the above-described technique has a possibility that processing will be executed in a wrong object or a possibility that it will return to processing which does not needs to be returned to since the possibility is too much worried and restart execution therein.

Therefore, the restart support device 10 according to the present invention aims for resolving the above problems and employs a concept illustrated in FIG. 9. For example, if an object follows a lifecycle in which operations such as "Create", "Read", "Write", and "Destroy" are performed as illustrated in FIG. 9, a concept of a version of an object which transitions with an operation is introduced corresponding to each operation. An example illustrated in FIG. 9 is one example. A version of an object does not transition with operations of "Create" and "Read" but transitions with an operation of "Write", that is, transitions from "1" to "2". Further, a version of an object does not transition with an operation of "Destroy". In FIG. 9, for convenience of description, "Task ID" is conferred to each operation.

The restart support device 10 according to the present invention stores version information related to a version of an object which transitions with an operation in association with each processing for each object in the version information storing unit 21. For example, for a system illustrated in (A) of FIG. 10, the version information storing unit 21 stores version information illustrated in (B) of FIG. 10. (B) of FIG. 10 illustrate a part of version information stored in the version information storing unit 21.

Version information stored in the version information storing unit 21 will be described with reference to (B) of FIG. 10. First, "object A-1" refers to "object A" which is branched to "A=1" in processing "003", and "object A-2" refers to "object A" which is branched to "A≠1" in processing "003". As can be seen from a row of "object A-1", in the first embodiment, a version of "object A-1" does not transition with operations of "Create" and "Read" and maintains "1" as is but transitions from "1" to "2" with an operation of "Write". A version does not transition with an operation of "Destroy" and maintains "2" as is.

(A) of FIG. 11 illustrates a part of version information stored in the version information storing unit 21. Here, it is assumed that the system illustrated in (A) of FIG. 10 has stopped execution in processing "004". Patterns of the presence of an object at this time are illustrated in (B) of FIG. 11. As illustrated in (3)-1 to (4)-2, two patterns such as whether or not "version 1" is present or whether or not "version 2" is present are considered for "object A".

In order to determine processing in which execution has to be restarted from among a plurality of processings, as illustrated in (C) of FIG. 11, success and failure of processing "004", the presence of an object for each pattern, and version information of each object are considered according to cases. That is, the restart processing determining unit 32 determines processing in which execution has to be restarted based on success and failure of processing "004", an object and version information of each object (see (A) of FIG. 11) which are stored in association with processing "004" in the version information storing unit 21, and an object and version information of each object (see (B) of FIG. 11) which are actually stored in the system as illustrated in (A) to (C) of FIG. 11.

For example, a case in which success and failure of processing "004" is "failure" and the presence of an object is pattern (3)-1 will be described. The restart processing determining unit 32 first considers that execution has to be restarted from processing "004" since processing "004" has failed. In order to restart execution from processing "004", "object A" of "veriosn-1" has to be present, and "object B" should not be present. However, since "object A" of "veriosn-1" and "object B" are present in pattern (3)-1, the restart processing determining unit 32 thus determines that "object B" has to be destroyed and execution has to be restarted from processing "004" as illustrated in (C) of FIG. 11.

Meanwhile, a case in which success and failure of processing "004" is "failure" and the presence of an object is pattern (3)-2 will be described. The restart processing determining unit 32 first considers that execution has to be restarted from processing "004" since processing "004" has failed. In order to restart execution from processing "004", "object A" of "veriosn-1" has to be present, and "object B" should not be present. However, since "object A" of "veriosn-2" and "object B" are present in pattern (3)-2, the restart processing determining unit 32 thus determines that "object A" and "object B" have to be destroyed and execution has to be restarted from processing "002" as illustrated in (C) of FIG. 11.

As a result, the restart support device 10 according to the present invention avoids a possibility that processing will be executed in a wrong object or a possibility that it will return to processing which does not need to be returned to since the possibility is too much worried and restart execution therein.

Procedure of processing by the restart support device according to the first embodiment

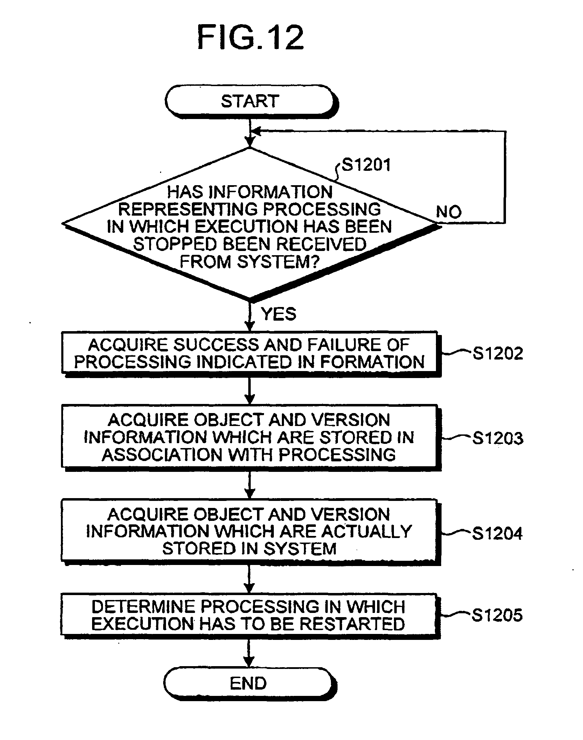

Next, processing by the restart support device according to the first embodiment will be described with reference to FIG. 12. FIG. 12 is a flowchart illustrating a procedure of processing by the restart support device according to the first embodiment.

First, the restart support device 10 determines whether or not information representing processing in which execution has been stopped has been received from the system (step S1201). When not received (No in step S1201), the restart support device 10 returns to processing for determining whether or not information representing processing in which execution has been stopped has been received from the system.

When received (Yes in step S1201), the restart support device 10 subsequently acquires success and failure of processing indicated in the received information (step S1202). This acquisition may be made by receiving as information representing processing in which execution has been stopped from the system, receiving together with information representing processing in which execution has been stopped from the system, or input by the user of the system.

The restart support device 10 acquires an object and version information which are stored in association with processing in the version information storing unit 21 (step S1203).

Next, the restart support device 10 acquires an object and version information which are actually stored in the system (step S1204). This acquisition may be made by receiving as information representing processing in which execution has been stopped from the system, receiving together with information representing processing in which execution has been stopped from the system, or input by the user of the system.

Thereafter, the restart support device 10 determines processing in which execution has to be restarted based on success and failure of processing, an object and version information of each object which are stored in the version information storing unit 21, and an object and version information of each object which are actually stored in the system (step S1205).

As a result, the restart support device 10 according to the first embodiment can determine processing in which execution has to be restarted when the system has stopped execution in certain processing.

In the first embodiment, the sequence in which the restart support device 10 acquires success and failure of processing, acquires information stored in the version information storing unit 21, and then acquires an object and version information which are actually stored in the system has been described, but the present invention is not limited thereto. Any sequence of processing such as a sequence of simultaneously acquiring success and failure of processing and an object and version information which are actually stored in the system or other sequences may be used.

### Effects of the first embodiment

As described above, according to the first embodiment, provided is a restart support program which executes a method of supporting restart of the system in a computer when the system in which a sequence flow representing an order in which a plurality of processings are executed, one or more objects which are processing targets in each processing, and one or more operations for each object are defined has stopped execution in certain processing. The restart support program stores version information of each object related to a version which transitions with an operation in association with each processing for each object. When the system has stopped execution in certain processing, the restart support program receives information representing processing in which execution has been stopped and, when the information is received, determines processing in which execution has to be restarted from among a plurality of processings based on success and failure of processing indicated in the received information, an object and version information of each object which are stored in association with processing, and an object and version information of each object which are actually stored in the system. Therefore, it is possible to determine processing in which execution has to be restarted when the system has stopped execution in certain processing.

### Second Embodiment

As the first embodiment, the technique of determining processing in which execution has to be restarted by the restart support device based on success and failure of processing, information stored in the version information storing unit, and an object and version information of an object which are actually stored in the system has been described so far, but the present invention is not limited thereto. The restart support device according to the present invention may determine processing in which execution has to be restarted based on information related to other processings which are associated with corresponding processing in the sequence flow as well as the above-described information related to processing itself in which execution has been stopped. A restart support device which determines processing in which execution has to be restarted based on information related to other processings which are associated with processing in the sequence flow will be described below as a second embodiment.

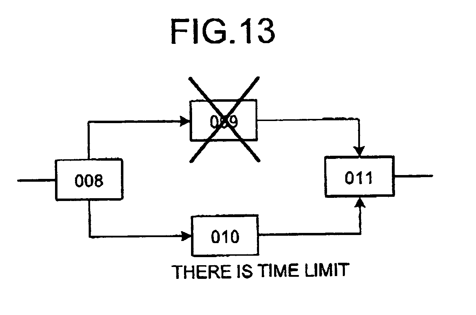

First, the restart processing determining unit 32 according to the second embodiment determines processing in which execution has to be restarted based on information related to other processings which are associated with corresponding processing in the sequence flow as well as processing indicated in information received by the stop information receiving unit 31. For example, FIG. 13 is a view for explaining restart processing determination according to the second embodiment. As illustrated in FIG. 13, the system executes processing "008, then executes processing "009" and processing "010" in parallel, and thereafter executes processing "011" by using both a processing result of processing "009" and a processing result of processing "010". The processing result of processing "010" has a time limit, and if the time limit is exceeded, the processing result can not be used in processing "011".

When the system has stopped execution in processing "009", if only processing "009" is considered, it is determined that execution has to be restarted from processing "009". However, even in this case, if it is determined that the processing result of processing "010" has already exceeded the time limit based on information related to processing "010" or processing "011" which is associated with processing "009" in the sequence flow, the restart processing determining unit 32 determines that it is optimal to restart execution from processing "008" without restarting execution from processing "009".

As described above, a basic principle is similar to the restart support device according to the first embodiment. However, the restart support device according to the second embodiment lists, for example, influence that processing generated by branching before a restart position recursively gives on subsequent processing and suggests it as a determination result or suggests processing of returning back to a previous one, including the processing when there is the processing, as a determination result.

### Effect of the second embodiment

As described above, according to the second embodiment, since processing in which execution has to be restarted is determined based on information related to other processing which is associated with processing in a sequence flow as well as processing indicated in received information, when the system has stopped execution in certain processing, it is possible to determine optimal processing in which execution has to be restarted in the whole sequence flow.

### Third Embodiment

The embodiments of the present invention have been described hereinbefore, but the present invention may be implemented in different various forms besides the embodiments described above.

### Storing of version information

In the first embodiment, the technique in which the version information storing unit stores version information input by the user of the restart support device has been described, but the present invention is not limited thereto and may be similarly applied to a technique of storing version information created from information defined in the system. Particularly, the restart support device stores version information in the version information storing unit such that access of an object is extracted from a flow description such as unified modeling language (UML) 2.0 or business process modeling language (BPML) to create a lifecycle management table of an object. In this case, since version information of an object is created from information defined in the system, it is possible to easily implement a structure for determining processing in which execution has to be restarted.

Alternatively, the present invention can be similarly applied to a technique for storing version information created from log information accumulated with processing of the system. Particularly, the restart support device stores version information in the version information storing unit such that a lifecycle management table of an object is created from a flow execution log (a log of an operation for an object such as database (DB) access). In this case, since version information of an object is created from log information accumulated with processing of the system, even when version information can not be created from information defined in the system, it is possible to implement a structure for determining processing in which execution has to be restarted.

### System configuration

Further, among respective processings described in the present embodiment, some or all of processings (for example, processing in which the restart support device acquires success and failure of processing from the system) described as automatically performed may be manually performed (for example, the user of the restart support device may input success and failure of processing to the restart support device), or some or all of processings described as manually performed may be automatically performed by a well-known method. Besides, a processing procedure, a control procedure, a specific name, and information including various data or parameters which are expressed in the specification or the drawings may be arbitrarily changed with the exception of a special case.

Further, the respective components of each device illustrated in the drawings are functional and conceptional and always does not need to be physically configured as illustrated (for example, FIG. 2). That is, a specific form in which each device is distributed or integrated is not limited to an illustrated one, and the whole or a part thereof may be configured to be distributed or integrated functionally or physically in arbitrary units depending on various loads or use situations. Further, some or all of respective processing functions performed in each device may be implemented by a central processing unit (CPU) or a program analyzed and executed by the CPU or implemented as hardware by wired logics.

### Computer

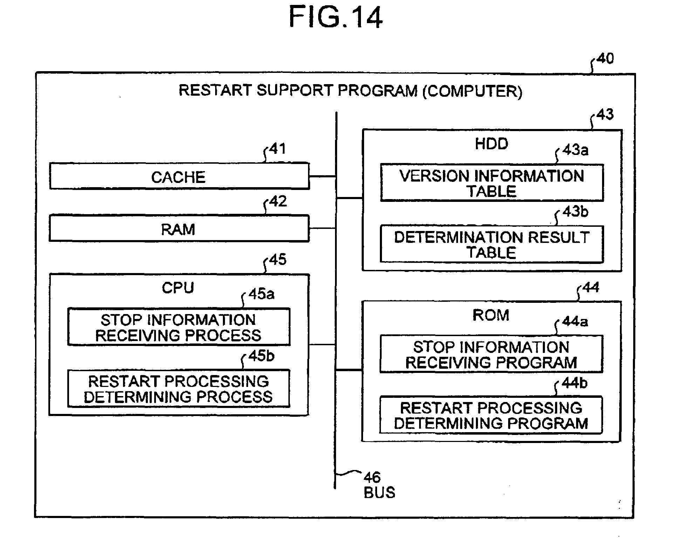

Next, as illustrated in FIG. 14, a restart support program (a computer) 40 is configured by connecting a cache 41, a random access memory (RAM) 42, a hard disc drive (HDD) 43, a read only memory (ROM) 44, and a CPU 45 through a bus 46. The restart support program which performs the same function as the first embodiment, that is, a stop information receiving program 44a and a restart processing determining program 44b, are previously stored in the ROM 44 as illustrated in FIG. 14.

When the CPU 45 reads out and executes the programs 44a and 44b, the programs 44a and 44b perform a stop information receiving process 45a and a restart processing determining process 45b, respectively, as illustrated in FIG. 14. The processes 45a and 45b correspond to the stop information receiving unit 31 and the restart processing determining unit 32, respectively, which are illustrated in FIG. 2.

A version information table 43a and a determination result table 43b are provided in the HDD 43 as illustrated in FIG. 14. The tables 43a and 43b correspond to the version information storing unit 21 and the determination result storing unit 22 which are illustrated in FIG. 2, respectively.

However, the programs 44a and 44b always do not need to be stored in the ROM 44 and, for example, may be stored in a "transportable physical medium" which is inserted into the computer 40 such as a flexible disc (FD), a CD-ROM, a MO disc, a DVD disc, an optical disc, and an IC card, or a "fixing physical medium" such as a hard disc drive (HDD) disposed inside or outside the computer 40, or "any other computer (or a server)" connected to the computer 40 via a public line, the Internet, a local area network (LAN), or a wide area network (WAN) so that the computer 40 can read out and execute the programs therefrom.

### INDUSTRIAL APPLICABILITY

As described above, the restart support program and the restart support device according to the present invention is useful in supporting restart of a system when a system in which a sequence flow representing an order in which a plurality of processings are executed, one or more objects which are processing targets in each processing, and one or more operations for each object are defined has stopped execution in certain processing, and, particularly, is suitable for determining processing in which execution has to be restarted when the system has stopped execution in certain processing.

## Claims

1. A restart support program for, when executed on a computer, executing a method of supporting restart of a system in a computer when the system in which a sequence flow representing an order in which a plurality of processings are executed, one or more objects which are processing targets in each processing, and one or more operations for each object are defined stops execution in certain processing, the program causing the computer to perform:
a version information storing step of storing version information related to a version of the object which transitions with the operation in association with each processing for each object;
a stop information receiving step of receiving information representing processing in which execution is stopped when the system stops execution in certain processing; and
a restart processing determining step of, when the information is received at the stop information receiving step, determining processing in which execution has to be restarted from among the plurality of processings based on success and failure of processing indicated in the received information,_the object_and_the version information of each object which are stored in association with processing at the version information storing step, and an object and version information of each object which are actually stored in the system.

2. The restart support program according to claim 1, wherein the restart processing determining step includes determining processing in which execution has to be restarted based on information related to other processing which is associated with the processing in a sequence flow as well as processing indicated in information received at the stop information receiving step.

3. The restart support program according to claim 1 or 2, wherein the version information storing step is created from information defined in the system.

4. The restart support program according to claim 1 or 2, wherein the version information storing step is created from log information accumulated with processing of the system.

5. A restart support device (10) for supporting restart of a system when the system in which a sequence flow representing an order in which a plurality of processings are executed, one or more objects which are processing targets in each processing, and one or more operations for each object are defined stops execution in certain processing, the restart support device comprising:
a version information storing unit (21) that stores version information related to a version of the object which transitions with the operation in association with each processing for each object;
a stop information receiving unit (31) that receives information representing processing in which execution is stopped when the system stops execution in certain processing; and
a restart processing determining unit (32) that, when the information is received by the stop information receiving unit (31), determines processing in which execution has to be restarted from among the plurality of processings based on success and failure of processing indicated in the received information, the object and the version information of each object which are stored in association with processing by the version information storing unit (21), and an object and version information of each object which are actually stored in the system.

6. The restart support device according to claim 5, wherein the restart processing determining unit (32) determines processing in which execution has to be restarted based on information related to other processing which is associated with the processing in a sequence flow as well as processing indicated in information received by the stop information receiving unit (31).

7. The restart support device of claim 5 or 6, wherein the version information storing unit (21) is created from information defined in the system.

8. The restart support device of claim 5 or 6, wherein the version information storing unit (21) is created from log information accumulated with processing of the system.

9. A restart support method for supporting restart of a system when the system in which a sequence flow representing an order in which a plurality of processings are executed, one or more objects which are processing targets in each processing, and one or more operations for each object are defined stops execution in certain processing, the restart support method comprising:
a version information storing step of storing version information related to a version of the object which transitions with the operation in association with each processing for each object;
a stop information receiving step of receiving information representing processing in which execution is stopped when the system stops execution in certain processing; and
a restart processing determining step of, when the information is received at the stop information receiving step, determining processing in which execution has to be restarted from among the plurality of processings based on success and failure of processing indicated in the received information, the object and the version information of each object which are stored in association with processing at the version information storing step, and an object and version information of each object which are actually stored in the system.

10. The restart support method according to claim 9, wherein the restart processing determining step includes determining processing in which execution has to be restarted based on information related to other processing which is associated with the processing in a sequence flow as well as processing indicated in information received at the stop information receiving step.

11. The restart support program according to claim 9 or 10, wherein the version information storing step is created from information defined in the system.

12. The restart support method according to claim 9 or 10, wherein the version information storing step is created from log information accumulated with processing of the system.

## Patentansprüche

1. Neustart-Unterstützungsprogramm zum, wenn es auf einem Computer ausgeführt wird, Ausführen eines Verfahrens des Unterstützens eines Neustarts eines Systems in einem Computer, wenn das System, in welchem ein Sequenzfluss, repräsentierend eine Reihenfolge in welcher eine Vielzahl von Verarbeitungen ausgeführt werden, ein oder mehrere Objekte, welche Verarbeitungsziele in jeder Verarbeitung sind, und eine oder mehrere Operationen für jedes Objekt definiert sind, in einer bestimmten Verarbeitung stoppt, das Programm verursacht, dass der Computer das Folgende ausführt:
einen Versionsinformations-Speicherschritt des Speicherns von Versionsinformation bezüglich einer Version des Objekts, welches mit der Operation in Übereinstimmung mit jeder Verarbeitung für jedes Objekt übergeht;
einen Stoppinformations-Empfangsschritt des Empfangens von Information repräsentierend die Verarbeitung, in welcher die Ausführung gestoppt wird, wenn das System die Ausführung in einer bestimmten Verarbeitung stoppt; und
einen Neustart-Verarbeitungsbestimmungsschritt des, wenn die Information in dem Stoppinformations-Empfangsschritt empfangen wird, Bestimmens von Verarbeitung, in welcher die Ausführung neu gestartet werden muss, unter der Vielzahl von Verarbeitungen, basierend auf Erfolg und Fehler der Verarbeitung, die in der empfangenen Information, dem Objekt und der Version von jedem Objekt, welche in Assoziation mit der Verarbeitung in dem Versionsinformations-Speicherschritt gespeichert wird, und einem Objekt und Versionsinformation von jedem Objekt, welche tatsächlich in dem System gespeichert ist, angezeigt wird.

2. Neustart-Unterstützungsprogramm nach Anspruch 1, wobei der Neustartprozess-Bestimmungsschritt beinhaltet Bestimmen einer Verarbeitung, in welcher eine Ausführung neu gestartet werden muss, basierend auf Information bezüglich anderer Verarbeitung, welche mit der Verarbeitung in einem Sequenzfluss assoziiert ist, sowie Verarbeitung, die in Information angezeigt ist, die in dem Stoppinformations-Empfangsschritt empfangen wird.

3. Neustart-Unterstützungsprogramm nach Anspruch 1 oder 2, wobei der Versionsinformations-Speicherschritt aus in dem System definierter Information erzeugt wird.

4. Neustart-Unterstützungsprogramm nach Anspruch 1 oder 2, wobei der Versionsinformations-Speicherschritt aus Log-Information erzeugt wird, die mit der Verarbeitung des Systems akkumuliert wird.

5. Neustart-Unterstützungseinrichtung (10) zum Unterstützen eines System, wenn das System, in welchem ein Sequenzfluss, repräsentierend eine Reihenfolge, in welcher eine Vielzahl von Verarbeitungen ausgeführt werden, eine oder mehrere Objekte, welche Verarbeitungsziele in jeder Verarbeitung sind, und eine oder mehrere Operationen für jedes Objekt definiert sind, eine Ausführung in einer bestimmten Verarbeitung stoppt, wobei die Neustart-Unterstützungseinrichtung umfasst:
eine Versionsinformations-Speichereinheit (21), welche Versionsinformation bezüglich einer Version des Objekts speichert, welches mit der Operation in Übereinstimmung mit jeder Verarbeitung für jedes Objekt übergeht;
eine Stoppinformations-Empfangseinheit (31), welche Information repräsentierend eine Verarbeitung empfängt, in welcher die Ausführung gestoppt wird, wenn das System die Ausführung in einer bestimmten Verarbeitung stoppt; und
eine Neustart-Verarbeitungsbestimmungseinheit (32), welche, wenn die Information durch die Stoppinformations-Empfangseinheit (31) empfangen wird,
eine Verarbeitung bestimmt, in welcher die Ausführung neu gestartet werden muss, unter der Vielzahl von Verarbeitungen, basierend auf Erfolg und Fehler von Verarbeitung, die in der empfangenen Information, dem Objekt und der Versionsinformation von jedem Objekt,
welche in Assoziation mit einer Verarbeitung durch die Versionsinformations-Speichereinheit (21) gespeichert wird, und einem Objekt und Versionsinformation von jedem Objekt, welche tatsächlich in dem System gespeichert sind, angezeigt wird.

6. Neustart-Unterstützungseinrichtung nach Anspruch 5, wobei die Neustart-Unterstützungs-Bestimmungseinheit (32) eine Verarbeitung bestimmt, in welcher die Ausführung neu gestartet werden muss, basierend auf Information bezüglich anderer Verarbeitung, welche assoziiert ist mit der Verarbeitung in einem Sequenzfluss sowie einer Verarbeitung, die in Information angezeigt wird, die durch die Stoppinformations-Empfangseinheit (31) angezeigt wird.

7. Neustart-Unterstützungseinrichtung nach Anspruch 5 oder 6, wobei die Versionsinformations-Speichereinheit (21) aus Information erzeugt wird, die in dem System definiert ist.

8. Neustart-Unterstützungseinrichtung nach Anspruch 5 oder 6, wobei die Versionsinformations-Speichereinheit (21) erzeugt wird aus Log-Information, die mit Verarbeitung des Systems akkumuliert wird.

9. Neustart-Unterstützungsverfahren zum Unterstützen eines Neustarts eines Systems, wenn das System, in welchem ein Sequenzfluss, repräsentierend eine Reihenfolge, in welcher eine Vielzahl von Verarbeitungen ausgeführt werden, eine oder mehrere Objekte, welche Verarbeitungsziele in jeder Verarbeitung sind, und eine oder mehrere Operationen für jedes Objekt definiert sind, Ausführung in einer bestimmten Verarbeitung stoppt, wobei das Neustart-Unterstützungsverfahren umfasst:
einen Versionsinformations-Speicherschritt des Speicherns einer Versionsinformation bezüglich einer Version des Objekts, welches übergeht mit der Operation in Assoziation mit jeder Verarbeitung für jedes Objekt;
einen Stoppinformations-Empfangsschritt des Empfangens von Information repräsentierend eine Verarbeitung, in welcher eine Ausführung gestoppt wird, wenn das System eine Ausführung in einer bestimmten Verarbeitung stoppt; und
einen Neustart-Verarbeitungs-Bestimmungsschritt des, wenn die Information in dem Stoppinformations-Empfangschritt empfangen wird, Bestimmens einer Verarbeitung, in welcher eine Ausführung neu gestartet werden muss, unter der Vielzahl von Verarbeitungen,
basierend auf Erfolg und Fehler einer Verarbeitung,
angezeigt in der empfangenen Information, dem Objekt der Versionsinformation von jedem Objekt, welche in Assoziation mit Verarbeitung in dem Versionsinformations-Speicherschritt gespeichert wird,
und einem Objekt und Versionsinformation von jedem Objekt, welches tatsächlich in dem System gespeichert ist.

10. Neustart-Unterstützungsverfahren nach Anspruch 9, wobei der Neustart-Verarbeitungs-Bestimmungsschritt beinhaltet Bestimmen einer Verarbeitung, in welcher eine Ausführung neu gesteuert werden muss, basierend auf Information bezüglich anderer Verarbeitung, welche assoziiert ist mit der Verarbeitung in einem Sequenzfluss sowie Verarbeitung, die in Information angezeigt wird, die in dem Stoppinformations-Empfangsschritt angezeigt wird.

11. Neustart-Unterstützungsprogramm nach Anspruch 9 oder 10, wobei der Versionsinformations-Speicherschritt aus Information erzeugt wird, die in dem System definiert ist.

12. Neustart-Unterstützungsverfahren nach Anspruch 9 oder 10, wobei der Versionsinformations-Speicherschritt erzeugt wird aus Log-Information, die mit der Verarbeitung des Systems akkumuliert wird.

## Revendications

1. Programme de support de redémarrage pour, lorsqu'il est exécuté sur un ordinateur, exécuter un procédé de support de redémarrage d'un système dans un ordinateur lorsque le système dans lequel un flux de séquence représentant un ordre dans lequel une pluralité de traitements sont exécutés, un ou plusieurs objets qui sont des cibles de traitement dans chaque traitement, et une ou plusieurs opérations pour chaque objet sont définis arrête l'exécution dans un certain traitement, le programme amenant l'ordinateur à effectuer :
une étape de stockage d'informations de version consistant à stocker des informations de version liées à une version de l'objet qui effectue une transition avec l'opération en association avec chaque traitement pour chaque objet ;
une étape de réception d'informations d'arrêt consistant à recevoir des informations représentant un traitement dans lequel l'exécution est arrêtée lorsque le système arrête l'exécution dans un certain traitement ; et
une étape de détermination de traitement de redémarrage consistant à, lorsque les informations sont reçues à l'étape de réception d'informations d'arrêt, déterminer un traitement dans lequel l'exécution doit être redémarrée parmi la pluralité de traitements sur la base de la réussite ou de l'échec du traitement indiqué dans les informations reçues, de l'objet et des informations de version de chaque objet qui sont stockés en association avec le traitement à l'étape de stockage d'informations de version, et d'un objet et d'informations de version de chaque objet qui sont réellement stockés dans le système.

2. Programme de support de redémarrage selon la revendication 1, dans lequel l'étape de détermination de traitement de redémarrage inclut un traitement de détermination dans lequel l'exécution doit être redémarrée sur la base d'informations liées à un autre traitement qui est associé au traitement dans un flux de séquence ainsi qu'un traitement indiqué dans des informations reçues à l'étape de réception d'informations d'arrêt.

3. Programme de support de redémarrage selon la revendication 1 ou 2, dans lequel l'étape de stockage d'informations de version est créée à partir d'informations définies dans le système.

4. Programme de support de redémarrage selon la revendication 1 ou 2, dans lequel l'étape de stockage d'informations de version est créée à partir d'informations de journal accumulées avec le traitement du système.

5. Dispositif de support de redémarrage (10) pour supporter le redémarrage d'un système lorsque le système dans lequel un flux de séquence représentant un ordre dans lequel une pluralité de traitements sont exécutés, un ou plusieurs objets qui sont des cibles de traitement dans chaque traitement, et une ou plusieurs opérations pour chaque objet sont définis arrête l'exécution dans un certain traitement, le dispositif de support de redémarrage comprenant :
une unité de stockage d'informations de version (21) qui stocke des informations de version liées à une version de l'objet qui effectue une transition avec l'opération en association avec chaque traitement pour chaque objet ;
une unité de réception d'informations d'arrêt (31) qui reçoit des informations représentant un traitement dans lequel l'exécution est arrêtée lorsque le système arrête l'exécution dans un certain traitement ; et
une unité de détermination de traitement de redémarrage (32) qui, lorsque les informations sont reçues par l'unité de réception d'informations d'arrêt (31), détermine un traitement dans lequel l'exécution doit être redémarrée parmi la pluralité de traitements sur la base de la réussite ou de l'échec du traitement indiqué dans les informations reçues, de l'objet et des informations de version de chaque objet qui sont stockés en association avec le traitement par l'unité de stockage d'informations de version (21), et d'un objet et d'informations de version de chaque objet qui sont réellement stockés dans le système.

6. Dispositif de support de redémarrage selon la revendication 5, dans lequel l'unité de détermination de traitement de redémarrage (32) détermine un traitement dans lequel l'exécution doit être redémarrée sur la base d'informations liées à un autre traitement qui est associé au traitement dans une séquence de flux ainsi qu'un traitement indiqué dans des informations reçues par l'unité de réception d'informations d'arrêt (31).

7. Dispositif de support de redémarrage selon la revendication 5 ou 6, dans lequel l'unité de stockage d'informations de version (21) est créée à partir d'informations définies dans le système.

8. Dispositif de support de redémarrage selon la revendication 5 ou 6, dans lequel l'unité de stockage d'informations de version (21) est créée à partir d'informations de journal accumulées avec le traitement du système.

9. Procédé de support de redémarrage pour supporter le redémarrage d'un système lorsque le système dans lequel un flux de séquence représentant un ordre dans lequel une pluralité de traitements sont exécutés, un ou plusieurs objets qui sont des cibles de traitement dans chaque traitement, et une ou plusieurs opérations pour chaque objet sont définis arrête l'exécution dans un certain traitement, le procédé de support de redémarrage comprenant :
une étape de stockage d'informations de version consistant à stocker des informations de version liées à une version de l'objet qui effectue une transition avec l'opération en association avec chaque traitement pour chaque objet ;
une étape de réception d'informations d'arrêt consistant à recevoir des informations représentant un traitement dans lequel l'exécution est arrêtée lorsque le système arrête l'exécution dans un certain traitement ; et
une étape de détermination de traitement de redémarrage consistant à, lorsque les informations sont reçues à l'étape de réception d'informations d'arrêt, déterminer un traitement dans lequel l'exécution doit être redémarrée parmi la pluralité de traitements sur la base de la réussite ou de l'échec du traitement indiqué dans les informations reçues, de l'objet et des informations de version de chaque objet qui sont stockés en association avec le traitement à l'étape de stockage d'informations de version, et d'un objet et d'informations de version de chaque objet qui sont réellement stockés dans le système.

10. Procédé de support de redémarrage selon la revendication 9, dans lequel l'étape de détermination de traitement de redémarrage inclut un traitement de détermination dans lequel l'exécution doit être redémarrée sur la base d'informations liées à un autre traitement qui est associé au traitement dans un flux de séquence ainsi qu'un traitement indiqué dans des informations reçues à l'étape de réception d'informations d'arrêt.

11. Procédé de support de redémarrage selon la revendication 9 ou 10, dans lequel l'étape de stockage d'informations de version est créée à partir d'informations définies dans le système.

12. Procédé de support de redémarrage selon la revendication 9 ou 10, dans lequel l'étape de stockage d'informations de version est créée à partir d'informations de journal accumulées avec le traitement du système.
